# EUROPEAN PATENT APPLICATION

(11) **EP 3 499 396 A1**
(43) Date of publication of application: **19.06.2019**
(21) Application number: 17206750.6
(22) Date of filing: 12.12.2017
(51) Int. Cl.: G06F 21/56

(54) **ABNORMAL BEHAVIOR DETECTION MODEL BUILDING APPARATUS AND ABNORMAL BEHAVIOR DETECTION MODEL BUILDING METHOD THEREOF**

(71) Applicant: Institute for Information Industry, Taipei (TW)
(72) Inventor: Wei, Te-En, Taipei City 106 (TW); Hsieh, Chih-Hung, Taoyuan City 330 (TW); Kung, Hsiang-Tsung, Taipei City 105 (TW)
(74) Representative: Michalski Hüttermann & Partner Patentanwälte mbB

(57) **Abstract**

An abnormal behavior detection model building apparatus and an abnormal behavior detection model building method thereof are provided. The abnormal behavior detection model building apparatus analyzes the parts of speech of a plurality of program operation sequences in a plurality of program operation sequence data associated with abnormal behaviors to generate a plurality of word vectors and cluster the word vectors. Based on the result of the clustering, the abnormal behavior detection model building apparatus obtains a feature vector of each of the program operation sequence data, and perform a supervised learning for a classification algorithm by using the feature vectors so as to build an abnormal behavior detection model.

## Description

### BACKGROUND OF THE INVENTION

### Field of the Invention

The present invention relates to an abnormal behavior detection model building apparatus and an abnormal behavior detection model building method. Specifically, the abnormal behavior detection model building apparatus of the present invention builds an abnormal behavior detection model according to a plurality of program operation sequences in a plurality of program operation sequence data associated with abnormal behaviors.

### Descriptions of the Related Art

With the rapid development of science and technology, people are also increasingly relying on computers and the Internet. For a wide variety of purposes, people with bad intentions can hack the servers/computers on the Internet through system vulnerabilities or malicious programs to steal data or crash the system.

To deal with these hacking behaviors, the current prior art adopts the detection mechanism of signature-based or static features for protection. However, these detection mechanisms are based on the pre-determined signatures or static features to determine the abnormal behavior of the program operation, so the detection means are limited to a fixed form and difficult to resist the malicious programs with confusion features. In addition, dynamic analysis is often limited by the Sandbox environment settings. Therefore, when the malware's behavior sequence varies in length and is impure, it is hard to find a general feature pattern as a basis for judging the abnormal behavior of the program.

In view of the above, how to establish an abnormal behavior detection model that does not depend on predetermined signatures or static features and is not affected by different Sandbox environment settings is urgent needed for the industry.

### SUMMARY OF THE INVENTION

The object of the present invention is to provide an abnormal behavior detection model. The present invention performs part-of-speech analysis of a plurality of program operation sequences of a plurality of program operation sequence data associated with abnormal behaviors to generate a plurality of word vectors, and clusters the word vectors. Based on the result of the clustering, the present invention obtains a feature vector of each of the program operation sequence data, and perform a supervised learning for a classification algorithm by using the feature vectors so as to build an abnormal behavior detection model. Different from the prior art, the abnormal behavior detection model built by the present invention can obtain the feature vectors of the program operation sequence data based upon the part-of-speech clustering result of the words in the program operation sequences, so the present invention can effectively detect and resist the malicious program with confusion features without relying on pre-determined signatures or static features and being influenced by the different Sandbox environment settings.

To achieve the above objective, the present invention discloses an abnormal behavior detection model building apparatus comprising a storage and a processor. The storage is configured to store a plurality of program operation sequence data and a plurality of behavior labels. Each of the program operation sequence data records a plurality of program operations sequences. Each of the program operation sequence data corresponds to one of the behavior labels. The processor is electrically connected to the storage, and is configured to execute the following operations: computing the program operation sequences of the program operation sequence data through a word embedding model to generate a plurality of word vectors, each of the word vectors corresponding to one of the program sequences; clustering the word vectors into a plurality of word vector groups based on a clustering algorithm; comparing the program operation sequences of each program operation sequence data with at least one program operation sequence corresponding to at least one of the word vectors including in each of the word vector groups to generate a feature vector of each program operation sequence data; performing a supervised learning of a classification algorithm to generate a classifier for classifying the feature vectors to correspond to the behavior labels based on the feature vectors and the behavior labels, building an abnormal behavior detection model based on the class of word vectors and the classifier.

In addition, the present invention further discloses an abnormal behavior detection model building method for an abnormal behavior detection model building apparatus. The abnormal behavior detection model building apparatus includes a storage and a processor. The storage is configured to store a plurality of program operation sequence data and a plurality of behavior labels. Each of the program operation sequence data records a plurality of program operation sequence. Each of the program operation sequence data corresponds to one of the behavior labels. The abnormal behavior detection model building method is executed by the processor and comprises following steps of: computing the program operation sequences of the program operation sequence data through a word embedding model to generate a plurality of word vectors, each of the word vectors corresponds to one of the program operation sequences; clustering the word vectors into a plurality of word vector groups based on a clustering algorithm; comparing the program operation sequences of each program operation sequence data with at least one program operation sequence corresponding to at least one of the word vectors included in each of the word vector groups to generate a feature vector of each of the program operation sequence data; performing a supervised learning of a classification algorithm based on the feature vectors and the behavior labels to generate a classifier for classifying the feature vectors to correspond to the behavior labels; and building an abnormal behavior detection model based on the word vector groups and the classifier.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**FIG. 1** is a schematic view of an abnormal behavior detection model building apparatus **1** according to the present invention;
**FIG. 2A** is a schematic diagram of a program operation sequence data;
**FIG. 2B** is a schematic view of another program operation sequence data;
**FIG. 3** depicts the distribution of each word vector in a two-dimensional space;
**FIG. 4** depicts each word vector group after clustering; and
**FIG. 5** is a flowchart diagram of an abnormal behavior detection building method according to the present invention.

### DESCRIPTION OF THE PREFERRED EMBODIMENT

In the following description, the present invention will be explained with reference to embodiments thereof. However, these embodiments of the present invention are not intended to limit the present invention to any environment, applications or implementations described in these embodiments. Therefore, description of these embodiments is only for purpose of illustration rather than to limit the scope of the present invention. It shall be appreciated that, in the following embodiments and the attached drawings, elements unrelated to the present invention are omitted from depiction; and dimensional relationships among individual elements in the attached drawings are illustrated only for ease of understanding, but not to limit the actual scale.

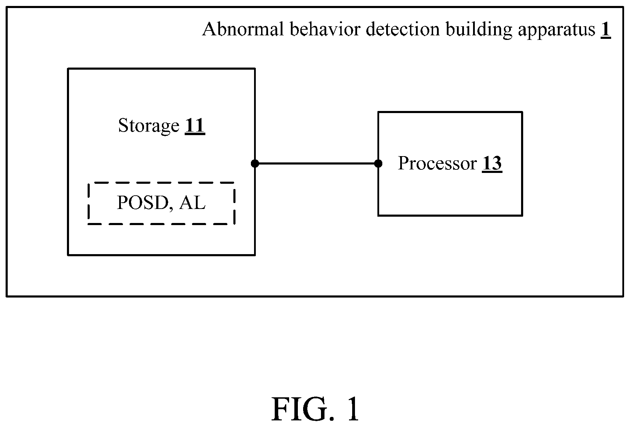

The first embodiment of the present invention is shown in **FIGs. 1-4****.** **FIG. 1** is a schematic view of an abnormal behavior detection model building apparatus **1** according to the present invention. The abnormal behavior detection model building apparatus **1** comprises a storage **11** and a processor **13.** The processor **13** is electrically connected to the storage **11.** The storage **11** is configured to store a plurality of program operation sequence data **POSD** and a plurality of behavior labels **AL.** Each of the program operation sequence data **POSD** records a plurality of program operation sequences. For example, the program operation sequences may be a dynamic program operation sequence, such as an Application Programming Interface (API) sequence and a system call sequence, but not limited thereto. In an embodiment, the dynamic program operation sequence can be captured by a tracking program. For another example, the program operation sequences may also be a static program operation sequence, such as an operation code (Opcode) sequence, but not limited thereto. In an embodiment, the static program operation sequence can be obtained through a decompile program.

The program operation sequence data **POSD** corresponds to the behavior labels **AL** (e.g., a normal behavior label, an abnormal behavior label, etc., but not limited thereto). In an embodiment, the program operation sequence data **POSD** includes a plurality of abnormal program operation sequence data, and each of the abnormal program operation sequence data is associated with a malicious program. In this case, the behavior labels **AL** may further include an Adware program, a Worm program, a Trojan program, etc., but are not limited thereto.

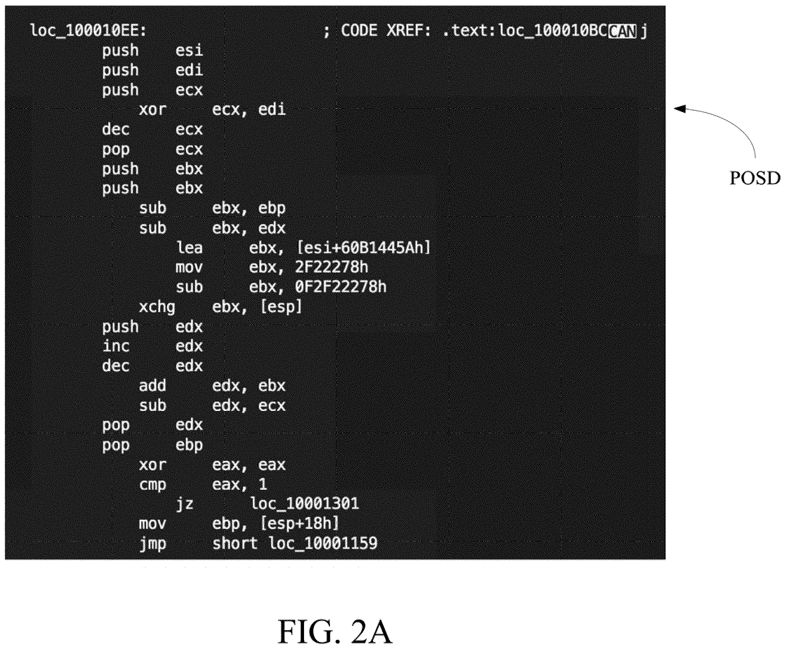

Taking the Opcode sequences as an example, as shown in **FIG. 2A**, it is an example of a program operation sequence datum **POSD**, and the program operation sequences contained therein are Opcode sequences. It should be noted that based on layout restrictions, the Opcode sequences shown in **FIG. 2A** are only parts of the program operation sequence datum **POSD.** The processor **13** computes the program operation sequences of the program operation sequence data **POSD** through a word embedding model, such as a Word-to-Vector (Word2Vec) model or a One-Hot Encoding model to generate a plurality of word vectors. Each word vector corresponds to one of the program operation sequences.

For example, the program operation sequences includes "xor", "sub", "add", "and", "push", "pop", "xchg", "inc", "cmp", "jmp" "Jz", the processor **13** computes the program operation sequences through the word embedding model and generates the word vectors **V1-V11** corresponding to the program operation sequences, respectively. It is assumed here that the word vector **V1** corresponds to "xor", the word vector **V2** corresponds to "sub", the word vector **V3** corresponds to "add", the word vector **V4** corresponds to "and", the word vector **V5** corresponds to "push", the word vector **V6** corresponds to "pop", the word vector **V7** corresponds to "xchg", the word vector **V8** corresponds to "inc", the word vector **V9** corresponds to "cmp", the word vector **V10** corresponds to "jmp", the word vector **V11** corresponds to "jz".

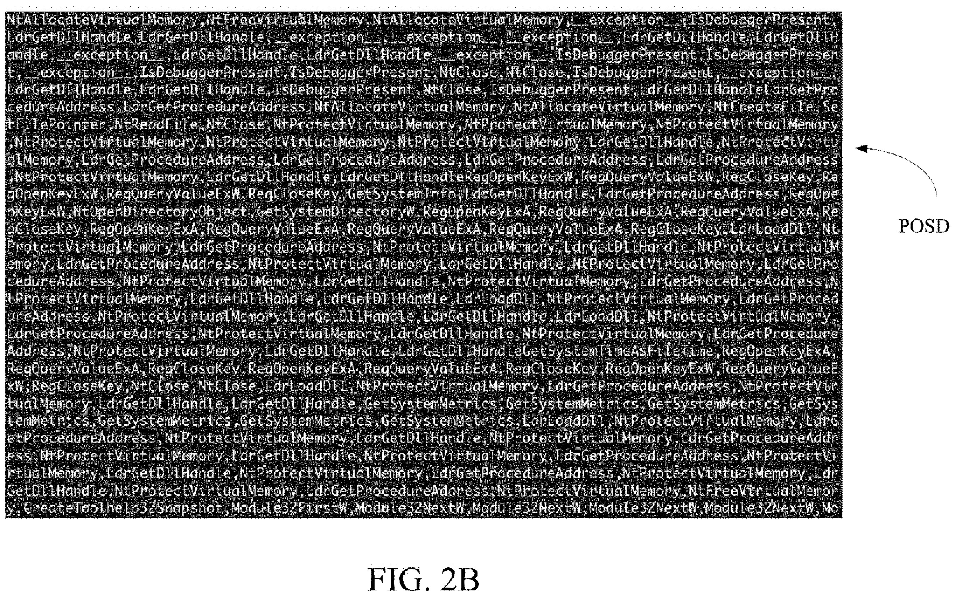

In addition, taking the API sequences as an example, as shown in **FIG. 2B**, it is an example of the program operation sequence datum **POSD.** It should be noted that based on layout restrictions, the API sequences shown in **FIG. 2B** are only parts of the program operation sequence datum **POSD.** Similarly, the processor **13** can compute the program operation sequences of the program operation sequence data **POSD** through the word embedding model to generate a plurality of word vectors. Each word vector corresponds to one of the program operation sequences.

For example, the program operation sequence includes "GetSystemlnfo", "GetFileSize", "GetSystemDirectoryW", "GetSystemMetrics", "RegQueryValueExA", "RegOpenKeyExA", "LdrLoadDll", "NtCreatFile", "NtReadfile", "NtClose", "NtOpenDirectoryObject", the processor **13** computes the program operation sequences through the word embedding model and generates the word vectors **V1-V11** corresponding to the program operation sequences, respectively. Here, it is assumed that the word vector **V1** corresponds to "GetSystemInfo", the word vector **V2** corresponds to "GetFileSize", the word vector **V3** corresponds to "GetSystemDirectoryW", the word vector **V4** corresponds to "GetSystemMetrics", the word vector **V5** corresponds to "RegQueryValueExA", the word vector **V6** corresponds to "RegOpenKeyExA", the word vector **V7** corresponds to "LdrLoadDll", the word vector **V8** corresponds to "NtCreatFile", the word vector **V9** corresponds to "NtReadfile", the word vector **V10** corresponds to "NtClose", the word vector **V11** corresponds to "NtOpenDirectoryObject".

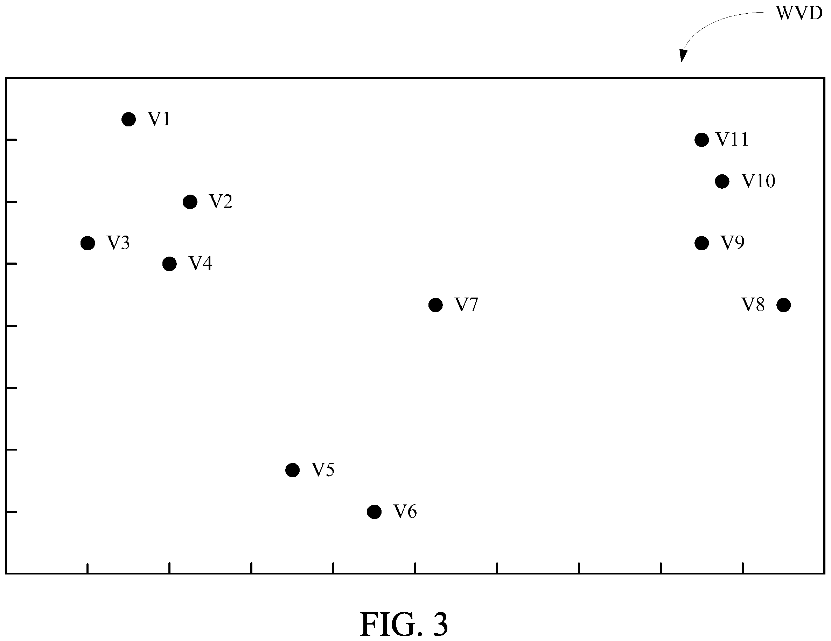

**FIG. 3** shows a word vector distribution space **WVD.** It should be noted that, in order to simplify the explanation, the word vector distribution space **WVD** in this embodiment represents the distribution of the word vectors in a two-dimensional space. However, in practice, according to the type of program operation sequence data, developers can decide on the dimension of the word vector distribution space **WVD.** Since those of ordinary skill in the art can know how to set the spatial dimension of the output, it will not be further described here.

In the word vector distribution space **WVD**, the word vectors whose positions are close have the similar part of speech or semantic meaning. Therefore, the present invention clusters these word vectors according to a clustering algorithm of unsupervised learning as a basis for subsequently retrieving features of each of the program operation sequence data **POSD.** In the present invention, the clustering algorithm may be one of an Affinity Propagation (AP) clustering algorithm, a Spectral clustering algorithm, a Fuzzy C-means (FCM) clustering algorithm, an Iterative Self-Organizing Data Analysis Technique Algorithm (ISODATA) clustering algorithm, a K-means clustering algorithm, a Complete-Linkage (CL) clustering algorithm, a Single-Linkage (SL) clustering algorithm and a Ward's method clustering algorithm, but not limited thereto.

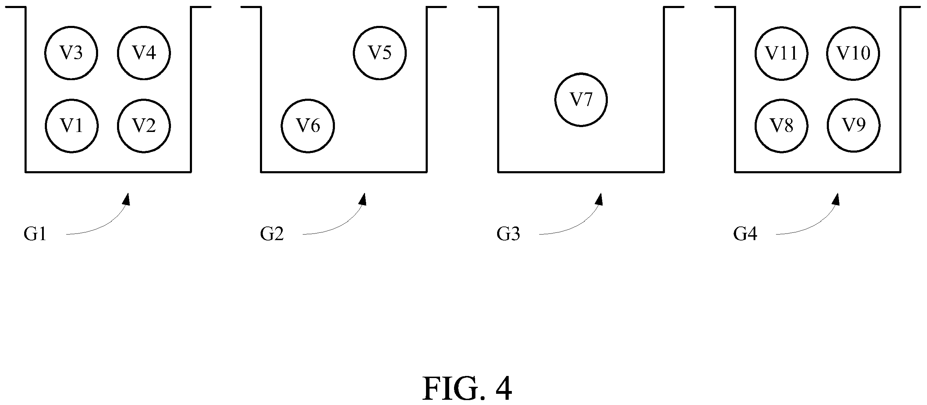

For example, the processor **13** clusters the word vectors into four word vector groups **G1-G4** according to the AP clustering algorithm, as shown in **FIG. 4****.** The word vector group **G1** includes the word vectors **V1-V4,** the word vector group **G2** includes the word vectors **V5-V6,** the word vector group **G3** includes the word vectors **V7**, and the word vector group **G4** includes the word vectors **V8-V11**. It should be note that the number of word vector groups can be determined by the developer himself/herself by setting the parameters of the clustering algorithm (e.g., directly setting the number of required groups, or setting the number of iterations performed by the clustering algorithm). Since the detailed operation of clustering based on the clustering algorithm can be understood by those of ordinary skill in the art, it will not be further described here.

After obtaining the word vector groups, the processor **13** severally compares the program operation sequences of the program operation sequence data **POSD** with at least one program operation sequence corresponding to at least one word vectors included in each word vector group to generate a feature vector of each of the program operation sequence data **POSD.** For example, it is assumed that in a program operation sequence data **POSD**, there are program operation sequences corresponding to the word vector **V2**, the word vector **V6**, the word vector **V8** and the word vector **V11** Thus, for this program operation sequence data **POSD**, the feature value of the word vector group **G1** is 1, the feature value of the word vector group **G2** is 1, the feature value of the word vector group **G3** is 0, and the feature value of the word vector group **G4** is 2, so the feature vector of the program operation sequence data **POSD** is (1,1,0,2). For another example, it is assumed that in another program operation sequence data **POSD,** there are program operation sequences corresponding to the word vector **V1,** the word vector **V2**, the word vector **V4**, the word vector **V5**, the word vector **V7**, the word vector **V9**, and the word vector **V10.** Thus, for the another program operation sequence data **POSD**, the feature value of the word vector group **G1** is 3, the feature value of the word vector group **G2** is 1, the feature value of the word vector group **G3** is 1, and the feature vector of the word vector group **G4** is 2, so the feature vector of the another program operation sequence data **POSD** is (3,1,1,2).

It should be noted that the aforementioned comparison for generating the feature vectors is implemented based on whether each of the program operation sequence data **POSD** has the at least one program operation sequence corresponding to at least one the word vector included in each word vector group. However, in other embodiments, the comparison for generating the feature vectors may also be implemented based on how many at least one program operation sequence corresponding to at least one at least one the word vector included in each word vector group in each of the program operation sequence data **POSD.** For example, it is assumed that there are five program operation sequences corresponding to the word vectors **V2**, three program operation sequences corresponding to the word vectors **V6**, one program operation sequence corresponding to the word vectors **V8**, and three program operations sequences corresponding to the word vector **V11** in a program operation sequence data **POSD.** Thus, for this program operation sequence datum **POSD**, the feature value of the word vector group **G1** is 5, the feature value of the word vector group **G2** is 3, the feature value of the word vector group **G3** is 0, and the feature value of the word vector group **G4** is 4, so the feature vector of the program operation sequence datum **POSD** is (5, 3, 0,4).

After generating the feature vectors of each of the program operation sequence data **POSD**, the processor **13** performs a supervised learning of a classification algorithm to generate a classifier, according to the feature vectors and the behavior labels **AL.** For example, the classification algorithm may be one of a Support Vector Machine (SVM) algorithm, a Decision Tree (DT) algorithm, a Bayes algorithm, and a Nearest Neighbors (NN) algorithm, but it is not limited thereto. The foregoing supervised learning is performed in order to classify the feature vectors into the appropriate categories through the classification algorithm so as to correspond to the behavior labels **AL.** For example, the program operation sequence data **POSD** corresponding to the malicious advertisement program label can be reliably classified into the same category, the program operation sequence data **POSD** corresponding to the worm program label can be reliably classified into the same category, the program operation sequence data **POSD** corresponding to the Trojan label can be reliably classified into the same category, and the program operation sequence data **POSD** corresponding to the normal behavior label can be reliably classified into the same category. Finally, the processor **13** builds an abnormal behavior detection model according to the word vector groups and the classifier.

In other embodiments, after building the abnormal behavior detection model, the processor **13** may test the abnormal behavior detection model according to a plurality of test program operation sequence data. Based on a detection rate, the processor **13** determines the accuracy rate of the abnormal behavior detection model identifies the test program operation sequence data so that the developer can re-perform the foregoing training to build an abnormal behavior detection model by adjusting related parameter settings of the word embedding model, the clustering algorithm and the classification algorithm according to the accuracy rate. Accordingly, the present invention can build different abnormal behavior detection models for different types of program operation sequence data through the foregoing operation, so as to detect abnormal behavior of various dynamic program operation sequences or static program operation sequences.

Moreover, the abnormal behavior detection model built by the present invention can be compiled into an executable program and run on an operating system to provide the operating system to detect abnormal behaviors (e.g., detecting malware, detecting illegal operations, etc.) In addition, all the program operation sequence data **POSD** used for building the abnormal behavior detection model according to the present invention may also be abnormal program operation sequence data (for example, all program operation sequence data are associated with malicious programs), so that the built abnormal behavior detection model can simply classify the data that has been identified as abnormal program operation sequence data. In other words, the abnormal behavior detection model built by the present invention can be used in cooperation with other abnormal behavior detection programs. When other abnormal behavior detection programs detect an abnormal program, the abnormal behavior detection model can further determine which category the program operation sequence data of the abnormal program belongs to. For example, the other abnormal behavior detection programs may be an anti-virus program. When the anti-virus program detects an abnormal program, the abnormal behavior detection model of the present invention may further help determine the category of the abnormal program.

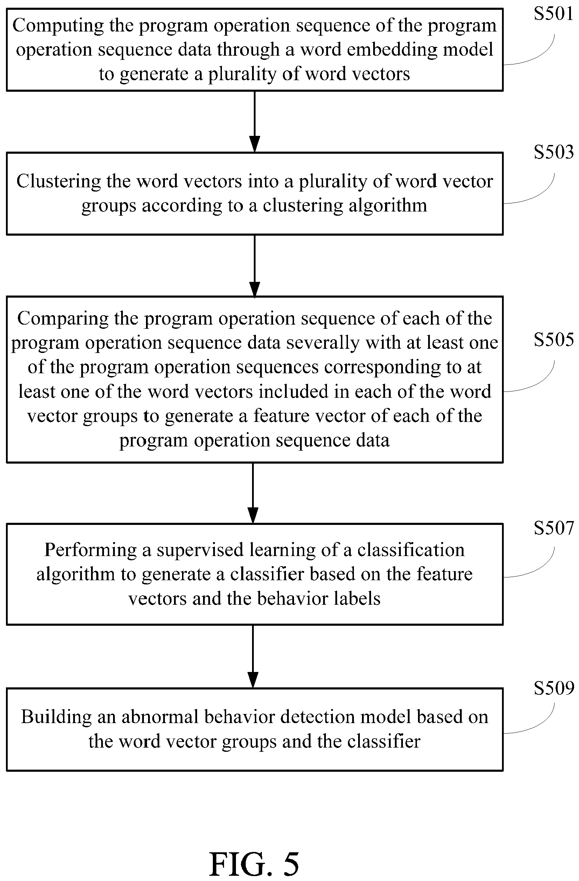

A second embodiment of the present invention is shown in **FIG. 5**, which is a flowchart diagram of an abnormal behavior detection model building method according to the present invention. The abnormal behavior detection model building method is for use in an abnormal behavior detection model building apparatus (e.g., the abnormal behavior detection model building apparatus **1** in the foregoing embodiment). The abnormal behavior detection model building apparatus includes a storage and a processor. The storage stores a plurality of program operation sequence data and a plurality behavior labels. Each of the program operation sequence data records a plurality of program sequences. Each of the program operation sequence data corresponds to one of the behavior labels. Abnormal behavior detection model building method is executed by the processor.

First, step **S501** is executed to compute the program operation sequences of the program operation sequence data through a word embedding model to generate a plurality of word vectors (e.g., the word vectors **V1-V11** shown in **FIG. 3**). As previously described, each word vector corresponds to one of the program operation sequences. Next, step **S503** is executed to cluster the word vectors into a plurality of word vector groups (e.g., the word vector groups **G1** to **G4** shown in **FIG. 4**) based on a clustering algorithm.

Then, step **S505** is executed to compare the program operation sequences of each of the program operation sequence data severally with at least one of the program operation sequences corresponding to at least one of the word vectors included in each of word vector groups to generate the feature vectors of each of the program operation sequence data. Afterwards, step **S507** is executed to perform a supervised learning of a classification algorithm based on the feature vectors and the behavior labels to generate a classifier. The classifier is used to classify the feature vectors to correspond to the behavior labels. Finally, at step **S509**, an abnormal behavior detection model is built according to the word vector groups and the classifier.

In other embodiments, the program operation sequences are one of a dynamic program operation sequence and a static program operation sequence. The dynamic program operation sequence is an Application Programming Interface (API) sequence or a system call sequence. The static program operation sequence is an Operation Code (Opcode) sequence. In an embodiment, the dynamic programming sequence is retrieved by a tracking program. In other embodiments, the word embedding model is one of a word-to-vector (Word2Vec) model and a One-Hot Encoding model.

In other embodiments, the clustering algorithm is one of an Affinity Propagation (AP) clustering algorithm, a Spectral clustering algorithm, a Fuzzy C-means (FCM) clustering algorithm Method, an Iterative Self-Organizing Data Analysis Technique Algorithm (ISODATA) clustering algorithm, a K-means clustering algorithm, a Complete-Linkage (CL) clustering algorithm , a Single-Linkage (SL) clustering algorithm and a Ward's method clustering algorithm.

In addition, in other embodiments, the classification algorithm is one of a Support Vector Machine (SVM) algorithm, a Decision Tree (DT) algorithm, a Bayes algorithm and a Nearest Neighbors (NN) algorithms.

In an embodiment, the program operation sequence data include a plurality of abnormal program operation sequence data, and each of the abnormal program operation sequence data is associated with a malicious program. In addition to the above steps, the abnormal behavior detection model building method in this embodiment can also execute all the steps described in the foregoing embodiments and have all the corresponding functions. Those of ordinary skill in the art can directly understand how this embodiment performs these operations and has these functions based on the foregoing embodiments, so details will not be further described herein.

In addition, the foregoing abnormal behavior detection model building method of the present invention may be implemented by a non-transitory computer readable medium. The non-transitory computer readable medium stores a computer program including a plurality of codes. After the computer program is loaded and installed in an electronic computing apparatus (e.g., the abnormal behavior detection model building apparatus 1), the codes comprised in the computer program are executed by the processor to execute the abnormal behavior detection model building method of the present invention. The non-transitory computer readable medium may be, for example, a read only memory (ROM), a flash memory, a floppy disk, a hard disk, a compact disk (CD), a universal serial bus (USB) disk, a magnetic tape, a database accessible to networks, or any storage media with the same function and well known to people skilled in this field.

According to the above descriptions, the present invention computes a plurality of program operation sequences of a plurality of program operation sequence data through a word embedding model to generate a plurality of word vectors and cluster the word vectors. The abnormal behavior detection model building apparatus obtains a feature vector of each of the program operation sequence data after clustering, and perform a supervised learning for a classification algorithm by using the feature vectors so as to build an abnormal behavior detection model. Accordingly, the abnormal behavior detection model of the present invention can obtain the feature vectors of the program operation sequence data based upon the part-of-speech clustering result of the program operation sequences, so that the malicious programs and the abnormal program operation behaviors with the confusion features can be effectively detected without relying on pre-determined signatures or static features and being influence by the different Sandbox environment settings.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. An abnormal behavior detection model building apparatus, comprising:
a storage, being configured to store a plurality of program operation sequence data and a plurality of behavior labels, each of the program operation sequence data recording a plurality of program operation sequences, each of the program operation sequence data corresponding to one of the behavior labels; and
a processor electrically connected to the storage, being configured to execute the following operations:
computing the program operation sequences of the program operation sequence data through a word embedding model to generate a plurality of word vectors, each of the word vectors corresponding to one of the program operation sequences;
clustering the word vectors into a plurality of word vector groups based on a clustering algorithm;
comparing the program operation sequences of each of the program operation sequence data severally with at least one of the program operation sequences corresponding to at least one of the word vectors included in each of the word vector groups to generate a feature vector of each of the program operation sequence data;
performing a supervised learning of a classification algorithm to generate a classifier for classifying the feature vectors to correspond to the behavior labels based on the feature vectors and the behavior labels; and
building the abnormal behavior detection model based on the word vector groups and the classifier.

2. The abnormal behavior detection model building apparatus of Claim 1, wherein the program operation sequences are one of a dynamic program operation sequence and a static program operation sequence.

3. The abnormal behavior detection model building apparatus of Claim 2, wherein the dynamic program operation sequence is an Application Programing Interface (API) sequence or a system call sequence.

4. The abnormal behavior detection model building apparatus of Claim 2, wherein the static program operation sequence is an Operation Code (Opcode) sequence.

5. The abnormal behavior detection model building apparatus of Claim 2, wherein the dynamic program operation sequence is retrieved by a tracking program.

6. The abnormal behavior detection model building apparatus of any of Claims 1 to 5, wherein the word embedding model is one of a Word-to-Vector (Word2Vec) model and a One-Hot Encoding model.

7. The abnormal behavior detection model building apparatus of any of Claims 1 to 6, wherein the clustering algorithm is one of an Affinity Propagation (AP) clustering algorithm, a Spectral clustering algorithm, a Fuzzy C-means (FCM) clustering algorithm, an Iterative Self-Organizing Data Analysis Technique Algorithm (ISODATA) clustering algorithm, a K-means clustering algorithm, a Complete-Linkage (CL) clustering algorithm, a Single-Linkage (SL) clustering algorithm and a Ward's method clustering algorithm, and the classification algorithm is one of a Support Vector Machine (SVM) algorithm, a Decision Tree (DT) algorithm, a Bayes algorithm and a Nearest Neighbors (NN) algorithm.

8. The abnormal behavior detection model building apparatus of any of Claims 1 to 7, wherein the program operation sequence data include a plurality of abnormal program operation sequence data, and each of the abnormal program operation sequence data is associated with a malicious program.

9. An abnormal behavior detection model building method for an abnormal behavior detection model building apparatus comprising a storage and a processor, the storage being configured to store a plurality of program operation sequence data and a plurality of behavior labels, each of the program operation sequence data recording a plurality of program operation sequences, each of the program operation sequence data corresponding to one of the behavior labels, and the abnormal behavior detection model building method being executed by the processor and comprising the following steps of:
computing the program operation sequences of the program operation sequence data through a word embedding model to generate a plurality of word vectors, each of the word vectors corresponding to one of the program operation sequences;
clustering the word vectors into a plurality of word vector groups based on a clustering algorithm;
comparing the program operation sequences of each program operation sequence data severally with at least one of the program operation sequences corresponding to at least one of the word vectors included in each of the word vector groups to generate a feature vector of each of the program operation sequence data;
performing a supervised learning of a classification algorithm to generate a classifier for classifying the feature vectors to correspond to the behavior labels based on the feature vectors and the behavior labels; and
building the abnormal behavior detection model based on the word vector groups and the classifier.

10. The abnormal behavior detection model building method of Claim 9, wherein the program operation sequences are one of a dynamic program operation sequence and a static program operation sequence.

11. The abnormal behavior detection model building method of Claim 10, wherein the dynamic program operation sequence is an Application Programing Interface (API) sequence or a system call sequence.

12. The abnormal behavior detection model building method of Claim 10, wherein the static program operation sequence is an Operation Code (Opcode) sequence.

13. The abnormal behavior detection model building method of Claim 10, wherein the dynamic program operation sequence is retrieved by a tracking program.

14. The abnormal behavior detection model building method of any of Claims 9 to 13, wherein the word embedding model is one of a Word-to-Vector (Word2Vec) model and a One-Hot-encoding model.

15. The abnormal behavior detection model building method of any of Claims 9 to 14, wherein the program operation sequence data include a plurality of abnormal program operation sequence data, and each of the abnormal program operation sequence data is associated with a malicious program.

## Amended claims

### Amended claims in accordance with Rule 137(2) EPC.

1. An abnormal behavior detection model building apparatus (1), comprising:
a storage (11), being configured to store a plurality of program operation sequence data (POSD) and a plurality of behavior labels (AL), each of the program operation sequence data (POSD) recording a plurality of program operation sequences, each of the program operation sequence data (POSD) corresponding to one of the behavior labels (AL); and
a processor (13) electrically connected to the storage (11), being configured to execute the following operations:
computing the program operation sequences of the program operation sequence data (POSD) through a word embedding model to generate a plurality of word vectors (V1-V11), each of the word vectors (V1-V11) corresponding to one of the program operation sequences;
clustering the word vectors (V1-V11) into a plurality of word vector groups (G1-G4) based on a clustering algorithm;
comparing the program operation sequences of each of the program operation sequence data (POSD) severally with at least one of the program operation sequences corresponding to at least one of the word vectors (V1-V11) included in each of the word vector groups (G1-G4) to determine whether each of the program operation sequence data (POSD) has the at least one of the program operation sequences corresponding to the at least one of the word vectors (V1-V11) included in each of the word vector groups (G1-G4) and generate a feature vector of each of the program operation sequence data (POSD) based on a result of the determination;
performing a supervised learning of a classification algorithm to generate a classifier for classifying the feature vectors to correspond to the behavior labels (AL) based on the feature vectors and the behavior labels (AL); and
building the abnormal behavior detection model based on the word vector groups (G1-G4) and the classifier.

2. The abnormal behavior detection model building apparatus (1) of Claim 1, wherein the program operation sequences are one of a dynamic program operation sequence and a static program operation sequence.

3. The abnormal behavior detection model building apparatus (1) of Claim 2, wherein the dynamic program operation sequence is an Application Programing Interface (API) sequence or a system call sequence.

4. The abnormal behavior detection model building apparatus (1) of Claim 2, wherein the static program operation sequence is an Operation Code (Opcode) sequence.

5. The abnormal behavior detection model building apparatus (1) of Claim 2, wherein the dynamic program operation sequence is retrieved by a tracking program.

6. The abnormal behavior detection model building apparatus (1) of any of Claims 1 to 5, wherein the word embedding model is one of a Word-to-Vector (Word2Vec) model and a One-Hot Encoding model.

7. The abnormal behavior detection model building apparatus (1) of any of Claims 1 to 6, wherein the clustering algorithm is one of an Affinity Propagation (AP) clustering algorithm, a Spectral clustering algorithm, a Fuzzy C-means (FCM) clustering algorithm, an Iterative Self-Organizing Data Analysis Technique Algorithm (ISODATA) clustering algorithm, a K-means clustering algorithm, a Complete-Linkage (CL) clustering algorithm, a Single-Linkage (SL) clustering algorithm and a Ward's method clustering algorithm, and the classification algorithm is one of a Support Vector Machine (SVM) algorithm, a Decision Tree (DT) algorithm, a Bayes algorithm and a Nearest Neighbors (NN) algorithm.

8. The abnormal behavior detection model building apparatus (1) of any of Claims 1 to 7, wherein the program operation sequence data (POSD) include a plurality of abnormal program operation sequence data, and each of the abnormal program operation sequence data is associated with a malicious program.

9. An abnormal behavior detection model building method for an abnormal behavior detection model building apparatus (1), comprising a storage (11) and a processor (13), the storage (11) is configured to store a plurality of program operation sequence data (POSD) and a plurality of behavior labels (AL), each of the program operation sequence data (POSD) records a plurality of program operation sequences, each of the program operation sequence data (POSD) corresponds to one of the behavior labels (AL), and the abnormal behavior detection model building method is executed by the processor (13) and comprises the following steps of:
computing the program operation sequences of the program operation sequence data (POSD) through a word embedding model to generate a plurality of word vectors (V1-V11), each of the word vectors (V1-V11) corresponding to one of the program operation sequences;
clustering the word vectors (V1-V11) into a plurality of word vector groups (G1-G4) based on a clustering algorithm;
comparing the program operation sequences of each program operation sequence data (POSD) severally with at least one of the program operation sequences corresponding to at least one of the word vectors (V1-V11) included in each of the word vector groups (G1-G4) to determine whether each of the program operation sequence data (POSD) has the at least one of the program operation sequences corresponding to the at least one of the word vectors (V1-V11) included in each of the word vector groups (G1-G4) and generate a feature vector of each of the program operation sequence data (POSD) based on a result of the determination;
performing a supervised learning of a classification algorithm to generate a classifier for classifying the feature vectors to correspond to the behavior labels (AL) based on the feature vectors and the behavior labels (AL); and
building the abnormal behavior detection model based on the word vector groups (G1-G4) and the classifier.

10. The abnormal behavior detection model building method of Claim 9, wherein the program operation sequences are one of a dynamic program operation sequence and a static program operation sequence.

11. The abnormal behavior detection model building method of Claim 10, wherein the dynamic program operation sequence is an Application Programing Interface (API) sequence or a system call sequence.

12. The abnormal behavior detection model building method of Claim 10, wherein the static program operation sequence is an Operation Code (Opcode) sequence.

13. The abnormal behavior detection model building method of Claim 10, wherein the dynamic program operation sequence is retrieved by a tracking program.

14. The abnormal behavior detection model building method of any of Claims 9 to 13, wherein the word embedding model is one of a Word-to-Vector (Word2Vec) model and a One-Hot-encoding model.

15. The abnormal behavior detection model building method of any of Claims 9 to 14, wherein the program operation sequence data (POSD) include a plurality of abnormal program operation sequence data, and each of the abnormal program operation sequence data is associated with a malicious program.
